Europäisches Patentamt

European Patent Office

Office européen des brevets

(11) Numéro de publication: **0 437 180 A1**

## (12) DEMANDE DE BREVET EUROPEEN

(21) Numéro de dépôt: 90811018.2

(22) Date de dépôt: **21.12.90**

(51) Int. Cl.⁵: **B09B 3/00**, B09B 1/00,
C02F 11/10, C22C 3/00,
C04B 18/02

(30) Priorité: 02.01.90 FR 9000064

(43) Date de publication de la demande:
**17.07.91 Bulletin 91/29**

(84) Etats contractants désignés:
**AT BE CH DE DK ES FR GB IT LI LU NL SE**

(71) Demandeur: **Sandoz, Jean**
**Rue Charles-l'Eplatenier 15**
**CH-2206 Les Geneveys-sur-Coffrane(CH)**

(72) Inventeur: **Sandoz, Jean**
**Rue Charles-l'Eplatenier 15**
**CH-2206 Les Geneveys-sur-Coffrane(CH)**

(74) Mandataire: **Nithardt, Roland**
**Cabinet Roland Nithardt Conseils en**
**Propriété Industrielle S.A. Y-Parc**
**Scientifique et Technologique Chemin de la**
**Sallaz Case postale 3347**
**CH-1400 Yverdon-les-Bains(CH)**

(54) **Procédé pour stabiliser des déchets contenant des carbures et des particules métalliques.**

(57) L'invention concerne un procédé permettant de traiter des déchets contenant notamment du cobalt métallique, de façon à leur donner une stabilité chimique suffisante pour permettre leur mise en décharge sans risques pour l'environnement. On part d'un mélange comprenant les particules métalliques à traiter et du carbure de silicium en poudre fine. Après une étape de déshydratation, le mélange en poudre est soumis à un traitement thermique à l'air libre durant plusieurs heures, à une température comprise entre 600° C et 1250° C. Dans la poudre ainsi traitée, des éléments métalliques tels que le cobalt, le chrome et le nickel résistent à une attaque à l'acide nitrique ou à l'acide chlorhydrique.

Applications : traitements de boues de meulage ou d'autres déchets tels que des cendres.

FIG. I

## PROCEDE POUR STABILISER DES DECHETS CONTENANT DES CARBURES ET DES PARTICULES METALLIQUES

La présente invention concerne un procédé pour stabiliser des déchets comprenant un mélange formé, d'une part d'abrasifs contenant des carbures métalliques, notamment du carbure de silicium et, d'autre part de particules contenant notamment du cobalt métallique.

L'invention concerne plus particulièrement, mais pas exclusivement, la stabilisation des produits d'abrasion résultant d'opérations d'usinage de surfaces métalliques telles que le meulage ou la rectification. Après décantation, ces produits se présentent sous la forme d'une boue dont les composants n'ont pas une valeur suffisante pour justifier un retraitement en vue de leur récupération. Par conséquent, les boues de ce genre sont généralement évacuées dans des décharges.

A l'heure actuelle, le renforcement des exigences en matière de protection de l'environnement rend de plus en plus rares les décharges acceptant ce genre de déchets, car certains métaux qu'ils contiennent peuvent donner naissance à des sels considérés comme polluants. Parmi les métaux concernés entrant couramment dans la composition des alliages ferreux, on trouve avant tout le cobalt, mais également d'autres métaux tels que le nickel et le chrome. Parmi les procédés connus actuellement pour fixer des résidus de métaux ou d'oxydes métalliques de ce genre, la publication JP-A-59 046 184 prévoit une absorption par un gel de silice dans des eaux usées véhiculant lesdits métaux, puis un traitement de ce gel au four électrique pour le vitrifier. Les publications FR-A-2 218 389 et DE-A-3 528 054 prévoient de fixer des métaux lourds ou des oxydes métalliques au moyen de silicates de soude ou de potasse et à l'aide de divers oxydes métalliques, avant une étape de cuisson à haute température. Tous ces procédés demandent des manipulations assez compliquées et l'adjonction de substances spécifiques aux produits à traiter.

La présente invention a pour but de fournir un procédé plus simple, permettant de conférer à ce genre de déchets, et en particulier aux métaux concernés tels que le cobalt, une stabilité chimique suffisante pour qu'ils puissent être mis en décharge sans créer un danger de pollution de l'environnement et en particulier des eaux.

Dans ce but, le procédé selon l'invention est caractérisé en ce que l'on soumet ledit mélange, sous une forme pulvérulente, à un traitement thermique dans lequel il est maintenu à une température comprise entre 600° C et 1250° C pendant une durée d'au moins une heure.

Dans le cas habituel où ledit mélange se présente initialement sous la forme d'une boue, le procédé comprend de préférence une étape de déshydratation avant le traitement thermique.

Dans une forme de réalisation particulièrement avantageuse, le traitement thermique est effectué dans l'air, à la pression atmosphérique. Ceci permet le traitement dans des appareils simples et couramment disponibles, par exemple des fours électriques, à gaz, à mazout, etc.

Dans une forme de réalisation avantageuse, le traitement thermique est effectué à une température inférieure à 1100° C, qu'on atteint facilement dans des fours usuels, et sa durée peut être inférieure ou égale à six heures.

De préférence, lesdites particules ont une taille inférieure à 20 $\mu$m.

Le mélange contient de préférence au moins 80% de carbures métalliques. A part du carbure de silicium et du cobalt, le mélange peut contenir des quantités importantes d'autres carbures, notamment du carbure de tungstène, et il peut contenir d'autres métaux, notamment du nickel, du chrome, du molybdène, du zinc etc.

La présente invention et ses avantages apparaîtront mieux dans la description suivante de différents exemples de réalisation, en référence aux dessins annexés, dans lesquels :

la figure 1 représente schématiquement une première forme d'installation pour la mise en oeuvre du procédé selon l'invention, et

la figure 2 représente schématiquement une seconde forme d'une telle installation.

Les exemples mentionnés ci-dessous concernent l'application du procédé à des boues résultant du meulage de billes en carbure de tungstène à l'aide d'un abrasif à base de carbure de silicium. Le contenu solide de ces boues comprend essentiellement de la poudre abrasive et des déchets de carbures et de métaux et il a en moyenne la composition suivante :

SiC env. 87,5 % (en poids)
WC env. 6,2 %
Fe env. 5 %
Co env. 0,5 %
Ni, Cr, Zn < à 0,1%

La granulométrie des particules solides des échantillons dont il est question ici est donnée par le

tableau suivant :

| Diamètre des particules | Fraction pondérale |
|---|---|
| > 20 µm | 0,6 % |
| 10 à 20 µm | 20,0 % |
| 5 à 10 µm | 40,6 % |
| 2 à 5 µm | 38,5 % |
| < 2 µm | 0,3 % |

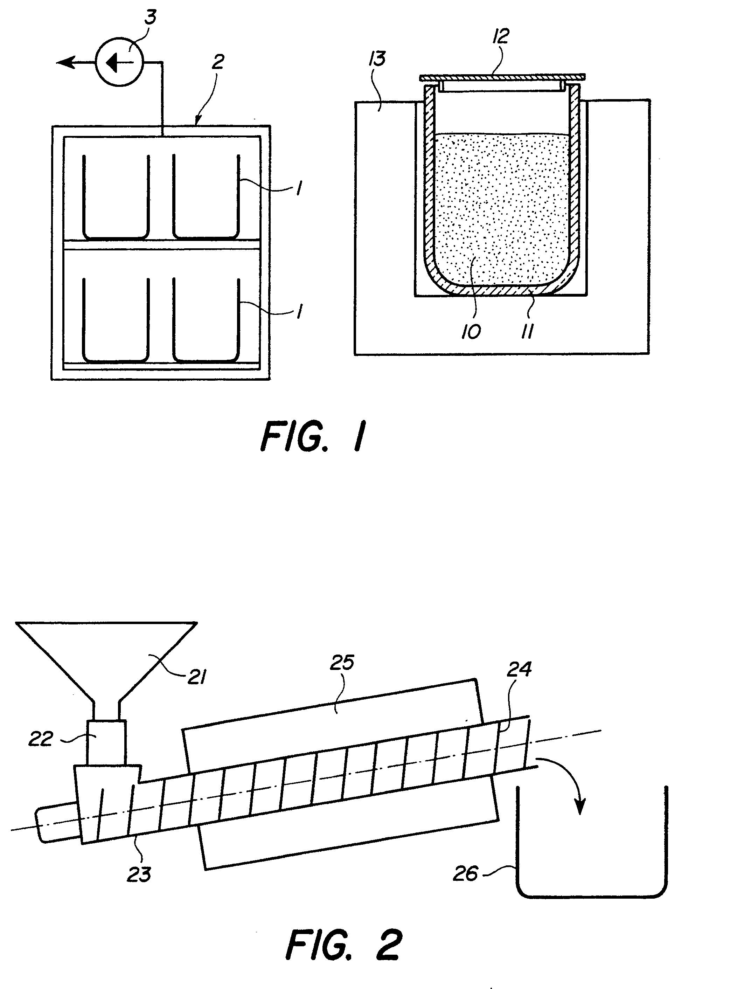

La fig. 1 représente un appareillage permettant de traiter par lots de tels déchets à partir de boues décantées contenant environ 75% de matière sèche. Pour déshydrater ces boues, on les répartit dans des récipients 1 que l'on place dans une enceinte 2 d'évaporation sous vide, raccordée à une pompe à vide 3. L'enceinte peut être légèrement chauffée, par exemple à 40°C, pour accélérer l'évaporation de l'eau. On obtient une poudre ayant la granulométrie indiquée plus haut, que l'on peut faire tamiser pour éliminer d'éventuels corps étrangers.

Ensuite, une charge 10 de cette poudre est placée dans un récipient réfractaire 11, qui peut être ouvert vers le haut ou muni d'un couvercle 12 non étanche, et qui est introduit dans un four électrique 13. A part la poudre 10, le récipient 11 contient de l'air à la pression atmosphérique. Le récipient 11 et son contenu sont portés à une température aussi élevée que le permet le four, mais sans dépasser une valeur de l'ordre de 1250°C à laquelle les carbures de silicium et de tungstène se transforment chimiquement. En pratique, les fours électriques courants permettent d'atteindre des températures de traitement de l'ordre de 900 à 1100°C. On maintient cette température pendant plusieurs heures, la poudre étant toujours en atmosphère libre, puis on laisse cette poudre refroidir à l'air.

Des échantillons de poudre traités de cette manière à des températures de 950°C à 1020°C pendant trois à six heures ont ensuite été plongés pendant une heure dans de l'acide nitrique ou de l'acide chlorhydrique à chaud, en vue de détecter quelles proportions du cobalt, du chrome et du nickel du mélange initial pouvaient être mises en solution par l'acide. On a constaté avec surprise que cette proportion était nulle ou insignifiante, c'est-à-dire que lesdits métaux étaient fixés chimiquement dans la poudre. Pour le moment, ce phénomène n'est pas entièrement expliqué. Comme la présence d'une forte proportion de carbure de silicium semble indispensable, on pense que les atomes de cobalt ainsi que d'autres métaux sont captés par les cristaux de l'abrasif, où ils forment localement des compositions eutectiques.

Des essais futurs doivent montrer quelle est la température minimale à laquelle le traitement thermique a une efficacité suffisante. Il est certain que la température de traitement ne doit pas être inférieure à environ 600°C, afin que les métaux à stabiliser puissent réagir chimiquement.

La fig. 2 montre schématiquement une forme de réalisation d'installation permettant un traitement thermique continu de la poudre, à la place du four électrique 13. La poudre placée dans une trémie d'alimentation 21 est délivrée en continu par un doseur 22 sur un convoyeur 23, par exemple à vis 24, traversant un four électrique 25. A la sortie du convoyeur 23, la poudre traitée tombe dans un bac 26 pour être refroidie.

Le procédé décrit ci-dessus permet de stabiliser efficacement le cobalt et les autres métaux concernés, de sorte que les poudres obtenues répondent aux prescriptions réglementaires de protection de l'environnement et peuvent être mises en décharge sans précautions particulières visant à éviter un risque de pollution par des sels solubles tels que les sels de cobalt. Par ailleurs, le procédé présente d'importants avantages sur le plan économique. Il peut être appliqué au moyen d'appareils simples, disponibles dans de nombreux ateliers mécaniques produisant les déchets concernés. Ces déchets peuvent être traités en vrac, sans avoir été triés. L'addition de substances particulières pour le traitement n'est pas nécessaire. Au lieu de chauffer le mélange dans un four électrique, on peut aussi envisager un chauffage direct par des gaz de combustion tels que ceux du gaz naturel.

La présente invention n'est pas limitée aux exemples de réalisation décrits ci-dessus, mais elle s'étend à toutes modifications ou variantes évidentes pour un homme du métier. En particulier, on peut envisager de traiter par ce procédé des déchets contenant des particules métalliques que l'on désire stabiliser, mais ne contenant pas de carbure de silicium, par exemple des cendres ou des poussières récoltées par des dépoussiéreurs, notamment dans une installation d'incinération. Ces matières pourraient être traitées thermiquement selon la présente invention après avoir été mélangées à une quantité appropriée de carbure de silicium.

**Revendications**

1.  Procédé pour stabiliser des déchets comprenant un mélange formé, d'une part d'abrasifs contenant des carbures métalliques, notamment du carbure de silicium et, d'autre part de particules contenant notamment du cobalt métallique, caractérisé en ce que l'on soumet ledit mélange (10), sous une forme pulvérulente, à un traitement thermique dans lequel il est maintenu à une température comprise entre 600° C et 1250° C pendant une durée d'au moins une heure.

2.  Procédé selon la revendication 1, dans lequel ledit mélange se présente initialement sous forme d'une boue, caractérisé en ce qu'il comprend une étape de déshydratation avant le traitement thermique.

3.  Procédé selon la revendication 1, caractérisé en ce que le traitement thermique est effectué dans l'air à la pression atmosphérique.

4.  Procédé selon la revendication 1, caractérisé en ce que le traitement thermique est effectué à une température inférieure à 1100° C.

5.  Procédé selon la revendication 1, caractérisé en ce que ladite durée est inférieure ou égale à six heures.

6.  Procédé selon la revendication 1, caractérisé en ce que lesdites particules ont une taille inférieure à 20$\mu$m.

7.  Procédé selon la revendication 1, caractérisé en ce que le mélange contient au moins 80% de carbures métalliques.

8.  Procédé selon la revendication 1, caractérisé en ce que le mélange contient du carbure de tungstène.

9.  Procédé selon la revendication 1, caractérisé en ce que le mélange contient du nickel.

FIG. 1

FIG. 2

**Office européen des brevets**

# RAPPORT DE RECHERCHE EUROPEENNE

Numéro de la demande

## EP 90 81 1018

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 942 990   (ENGSTROM)<br>* En entier *<br>– – – | 1 | B 09<br>B 3/00<br>B 09 B 1/00 |
| A | PATENT ABSTRACTS OF JAPAN, vol. 8, no. 134 (C-230), 21 juin 1984;<br>& JP-A-59 046 184 (FUJI DEIBUISON KAGAKU)<br>– – – | 1 | C 02 F 11/10<br>C 22 C 3/00<br>C 04 B 18/02 |
| A | DE-A-3 528 054   (DUMONT)<br>* Revendications 1,5 *<br>– – – | 1 | |
| A | FR-A-2 218 389   (HITACHI SHIPBUILDING & ENGINEE-RING)<br>* Rev. *<br>– – – | 1 | |
| A | US-A-2 704 240   (AVERY et al.)<br>* Colonne 1, lignes 5-60 *<br>– – – – – | 1 | |

| DOMAINES TECHNIQUES RECHERCHES (Int. Cl.5) |
|---|
| C 04 B<br>C 02 F<br>C 22 F |

Le présent rapport de recherche a été établi pour toutes les revendications

| Lieu de la recherche | Date d'achèvement de la recherche | Examinateur |
|---|---|---|
| La Haye | 09 avril 91 | KASPERS H.M.C. |